# EUROPÄISCHE PATENTSCHRIFT

(11) **EP 1 593 589 B1**
(45) Veröffentlichungstag und Bekanntmachung des Hinweises auf die Patenterteilung: **25.06.2008**
(21) Anmeldenummer: 05009646.0
(22) Anmeldetag: 03.05.2005
(51) Int. Cl.: B62D 65/06, B62D 65/02

(54) **Montagesystem zum Einkleben eines Kraftfahrzeug-Karosserieteils in eine Fahrzeugkarosserie**
Assembly system for adhesivly securing a motor vehicle body part onto a vehicle body
Système d'assemblage par collage d'une pièce de carrosserie de véhicule automobile dans une carrosserie

(30) Priorität: 06.05.2004 DE 102004022382
(43) Veröffentlichungstag der Anmeldung: 09.11.2005
(73) Patentinhaber: GM Global Technology Operations, Inc., Detroit, MI 48265-3000 (US)
(72) Erfinder: Meyermann, Ralf, 65193 Wiesbaden (DE)
(74) Vertreter: Strauss, Peter

(56) Entgegenhaltungen:
- EP-A- 1 291 271
- GB-A- 2 312 876
- US-A- 5 845 387

## Beschreibung

Die Erfindung betrifft ein Montagesystem zum Einkleben eines Fahrzeugkarosserieteils und insbesondere eines Dachmoduls in eine Fahrzeugkarosserie.

Aus der EP 1 291 271 A2 und der GB 2 312 876 A ist ein solches Montagesystem bekannt, wonach zum effizienten Dachmoduleinbau eine Klebstoffraupe anstatt auf die Fahrzeugkarosserie direkt auf das Dachmodul aufgebracht wird, welches anschließend hochgenau gegenüber dem Dachausschnitt der Fahrzeugkarosserie positioniert und in diesem befestigt wird. Das zugehörige Montagesystem umfasst gemäß der EP 1 291 271 A2 einen Kleberoboter, eine Handhabungsvorrichtung und einen Montageroboter. Gemäß der GB 2 312 876 A ist ein einziger Roboter vorgesehen, der sowohl das Aufbringen des Klebstoffs als auch die nachfolgende Handhabung des Dachmoduls übernimmt. Dieser Roboter ist aufgrund seiner verschiedenen Funktionen verhältnismäßig kompliziert aufgebaut.

Ein Montagesystem gemäß der EP 1 291 271 A2 hat die Nachteile, dass wegen der verschiedenen benötigten Roboter und Handhabungsvorrichtungen der Platzbedarf einer entsprechenden Montagezelle groß ist und die Anschaffungs- und Unterhaltskosten hoch sind.

Aufgabe der vorliegenden Erfindung ist es daher, ein Montagesystem für das Einkleben von Fahrzeugkarosserieteilen bereitzustellen, welches eine kompakte Bauweise aufweist und dessen Anschaffung- und Unterhaltskosten niedrig sind.

Diese Aufgabe wird gelöst durch den Gegenstand der unabhängigen Patentansprüche. Vorteilhafte Weiterbildungen der vorliegenden Erfindung ergeben sich aus den abhängigen Patentansprüchen.

Eine Montagezelle zum Einkleben eines Fahrzeugkarosserieteils, wie beispielsweise eines Dachmoduls, in eine Fahrzeugkarosserie gemäß der vorliegenden Erfindung weist einen Montageroboter und eine Kleberapplikationseinrichtung auf, wobei die Kleberapplikationseinrichtung unbeweglich ist und alle benötigten Bewegungsabläufe von demselben Montageroboter durchgeführt werden.

Die Montagezelle besitzt des Weiteren ein Fahrzeugkarosseriefördersystem, mit welchem die Fahrzeugkarosserie dem Montageroboter zum Einkleben des Dachmoduls zugeführt wird. Um eine kontinuierliche Fertigung zu ermöglichen, ist es von Vorteil, in der Montagezelle außerdem Klebstofffässer mit Klebstoffpumpen bereitzustellen.

Gemäß der vorliegenden Erfindung nimmt der Montageroboter das einzusetzende Dachmodul von einem Ladungsträger oder einem Förderband auf und dreht das Dachmodul dann im Raum, z.B. um 180 Grad, so dass der Kleber auf den entsprechenden Stellen der dafür vorgesehenen Seite, also z.B. auf der Innenseite, des Dachmoduls aufgebracht werden kann. Anschließend schwenkt der Montageroboter das umgedrehte Dachmodul zur Kleberapplikationseinrichtung . Zum Aufbringen wenigstens einer Kleberstelle bewegt der Montageroboter das Dachmodul auf einer vorgegebenen Bahn unter der Kleberapplikationseinrichtung entlang, welche eine Kleberapplikationsdüse besitzt. Die Kleberapplikationsdüse ist mit lediglich einer Achse versehen, die benötigt wird, um den Kleber, welcher typischerweise als Kleberraupe aufgetragen wird, in den Radien exakt auszurichten. Anschließend dreht der Montageroboter das mit dem Kleber versehene Dachmodul zurück in die Ausgangslage, so dass die Außenseite des Dachmoduls nach oben weist. Das Dachmodul wird dann passgenau zur Fahrzeugkarosserie ausgerichtet, welche zwischenzeitlich von einem das Fahrzeugkarosseriefördersystem an eine genau definierte Position transportiert wurde. Danach wird das Dachmodul von dem Montageroboter passgenau in die Einbaulage eingesetzt und die wenigstens eine Klebestelle angedrückt. Abschließend gibt der Montageroboter das Dachmodul frei und fährt zurück, um eine neues Dachmodul aufzunehmen.

Die Positionierung des Dachmoduls relativ zur Fahrzeugkarosserie kann dabei mit Hilfe einer am Montageroboter angebrachten, kombinierten mechanischen Greif- und Positioniervorrichtung oder mit Hilfe eines Kamera- und/oder Laser- und/oder Sensorsystems erfolgen.

Um bei schnell laufenden Produktionslinie die Taktzeit einhalten zu können und/oder um im Falle einer Störung ein Ersatzsystem zu haben, ist es von Vorteil, wenn die erfindungsgemäße Montagezelle einen zweiten Montageroboter, welcher mit dem ersten Montageroboter und eine zweite Kleberapplikationseinrichtung , welche mit der ersten Kleberapplikationseinrichtung identisch ist, aufweist.

In einer möglichen Ausführungsform der vorliegenden Erfindung sind erster und zweiter Montageroboter, sowie erste und zweite Kleberapplikationseinrichtung jeweils spiegelbildlich angeordnet. Der erste und der zweite Montageroboter arbeiten parallel, die Bewegungsabläufe sind jedoch zeitlich versetzt.

Die erfindungsgemäße Montagezelle zum Einkleben eines Fahrzeugkarosserieteils wird im Folgenden anhand eines Ausführungsbeispiels mit einer Montagezelle zum Einkleben eines Dachmoduls entsprechend der Zeichnung beschrieben.
- Figur 1: zeigt schematisch eine erfindungsgemäße Montagezelle in Draufsicht,
- Figur 2: zeigt die Aufnahme eines Dachmoduls durch einen Montageroboter gemäß der vorliegenden Erfindung,
- Figur 3: zeigt den Kleberauftrag auf das Dachmodul gemäß der vorliegenden Erfindung und
- Figur 4: zeigt den Einbau des Dachmöduls in eine Fahrzeugkarosserie gemäß der vorliegenden Erfindung.

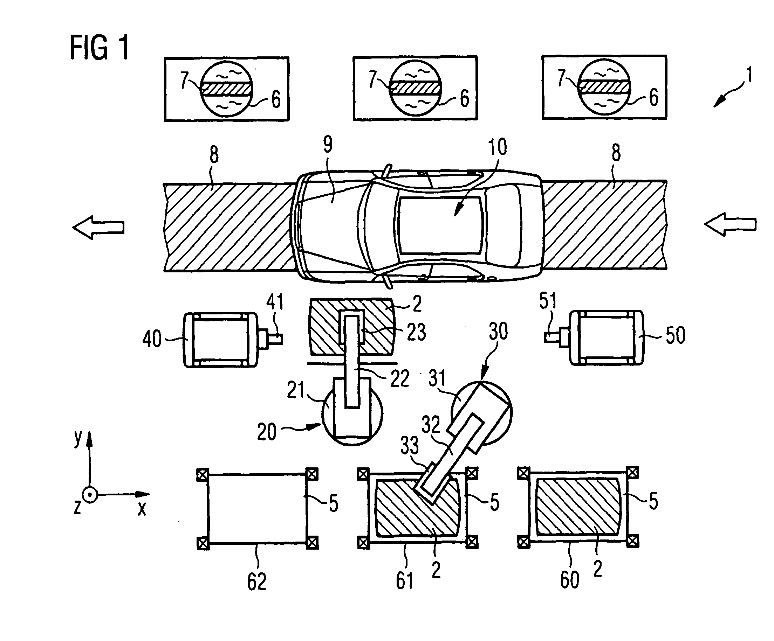

Figur 1 zeigt schematisch eine erfindungsgemäße Montagezelle 1 in Draufsicht. Die Montagezelle 1 wird durch ein Fahrzeugkarosseriefördersystem 8 in zwei Bereiche geteilt. Auf der einen Seite des Fahrzeugkarosseriefördersystems 8 sind Klebstofffässer 6 mit Klebstoffpumpen 7 angeordnet. Auf der anderen Seite des Fahrzeugkarosseriefördersystems 8 befinden sich ein Montageroboter 20 und eine Kleberapplikationseinrichtung 40, sowie mehrere Ladungsträger 5 mit einzubauenden Dachmodulen 2.

Ihr dargestellten Ausführungsform geschieht die Zufuhr der Ladungsträger 5 von rechts. Mit der Bezugsziffer 60 ist ein neuer Ladungsträger 5 mit neuen Dachmodulen 2 gekennzeichnet. Mit 61 ist der Ladungsträger 5 an der gemeinsamen Entnahmestation beider Roboter 20, 30 gekennzeichnet. Die Montagezelle 1 ist dabei so ausgelegt, dass sich Ladungsträger 5 an der Entnahmestation 61 in der Reichweite beider Roboterarme 22, 32 befindet. Die Bezugsziffern 62 gekennzeichnet den leeren Ladungsträger 5 nach Entnahme aller Dachmodule 2.

In der hier dargestellten Ausführungsform ist in der Montagezelle 1 neben dem Montageroboter 20 ein weiterer, identischer Montageroboter 30, sowie eine dazugehörige Kleberapplikationseinrichtung 50 angeordnet.

Die Kleberapplikationseinrichtung 40, 50 sind stationär bzw. unbeweglich, besitzen aber jeweils eine Kleberapplikationsdüse 41, 51, welche jeweils eine Achse aufweist. Die Montageroboter 20, 30 weisen Drehplatten 21, 31 und Roboterarme 22, 32 auf und können sich in allen drei Raumrichtungen bewegen.

Auf dem Fahrzeugkarosseriefördersystem 8 befindet sich eine Fahrzeugkarosserie 9 mit Dachausschnitt 10. Die Fahrzeugkarosserie 9 wird vom Fahrzeugkarosseriefördersystem 8 gemäß der dargestellten Ausführungsform der vorliegenden Erfindung in Pfeilrichtung von rechts nach links transportiert.

In Figur 1 sind außerdem die drei Richtungen, in denen sich die Montageroboter bewegen, eingezeichnet. X und y liegen in der Ebene des Bodens der Montagezelle 1 und z steht dazu senkrecht.

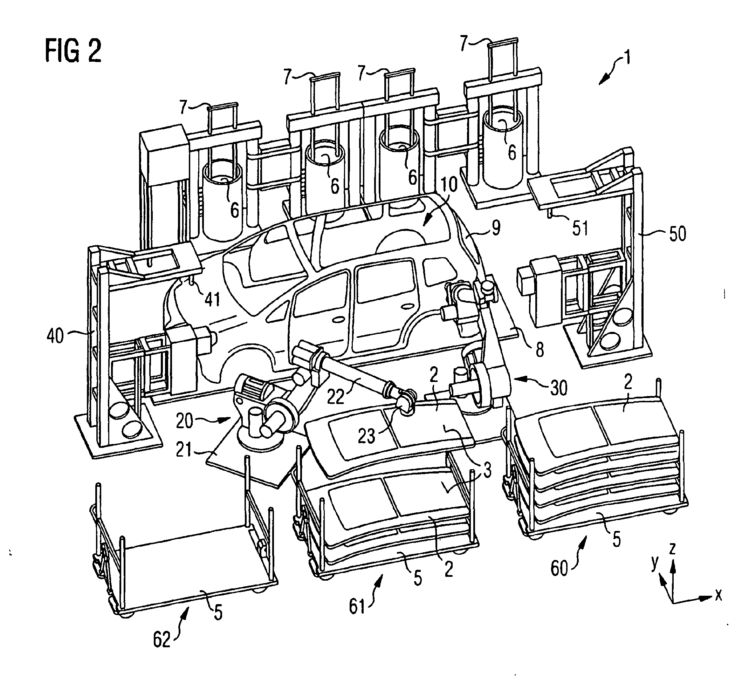

Figur 2 zeigt die Aufnahme eines Dachmoduls 2 durch einen Montageroboter 20 gemäß der vorliegenden Erfindung.

Der Montageroboter 20 dreht sich zu dem entsprechend positionierten Ladungsträger 5, welcher die Dachmodule 2 aufweist und nimmt mit einer Greifvorrichtung 23 eines der Dachmodule 2 an dessen Außenseite 3 auf.

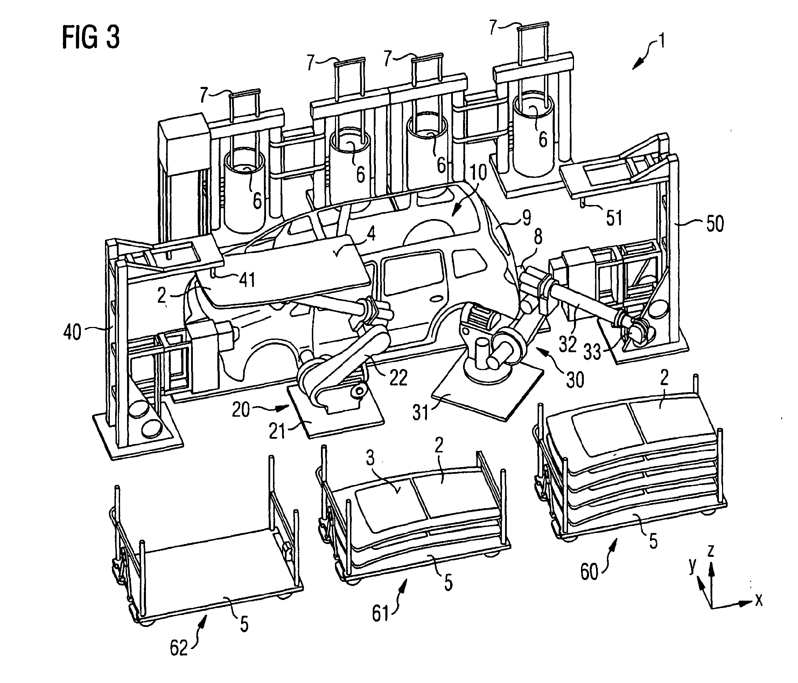

Figur 3 zeigt den Kleberauftrag auf das Dachmodul 2 gemäß der vorliegenden Erfindung. Der Montageroboter 20 führt die Innenseite 4 des Dachmoduls 2 unter eine stationäre Kleberapplikationseinrichtung 40, welche eine Kleberapplikationsdüse 41 (verdeckt) aufweist. Die Kleberapplikationsdüsen 41 weist dabei genau eine Drehachse auf, um die Kleberraupe in den Radien exakt auszurichten.

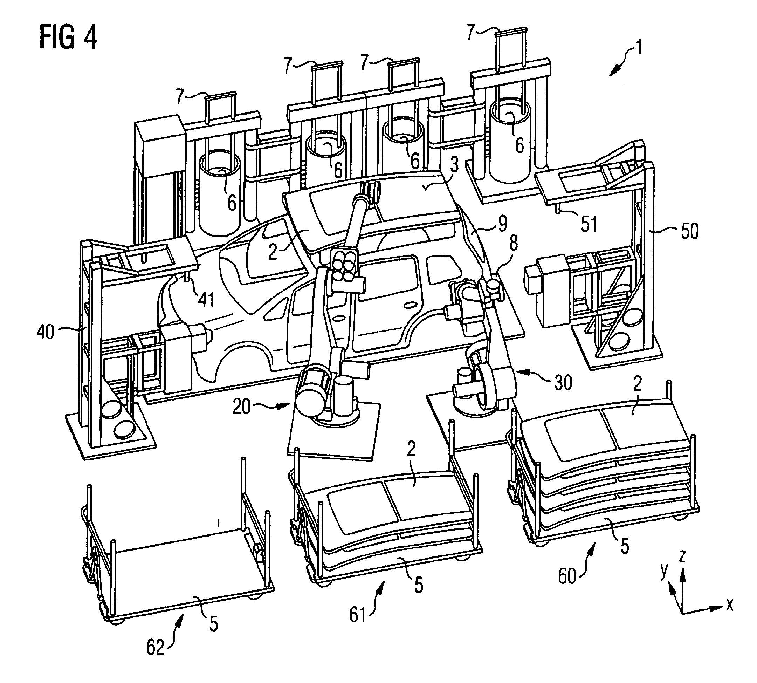

Figur 4 zeigt den Einbau des Dachmoduls 2 in eine Fahrzeugkarosserie 9 gemäß der vorliegenden Erfindung. Der Montageroboter 20 setzt das Dachmodul 2 in den Dachausschnitt 10 (verdeckt) der Fahrzeugkarosserie 9 passgenau mit der Außenseite 3 nach oben ein.

In den Figuren 1 bis 4 ist außerdem ein zweiter Montageroboter 30 mit Roboterarm 32 und Greifvorrichtung 33 dargestellt, welcher identisch ist mit dem Montageroboter 20 und welcher die gleichen Bewegungsabläufe ausführt. Des Weiteren ist eine Kleberapplikationseinrichtung 50 mit Kleberapplikationsdüse 51, welche identisch ist mit Kleberapplikationseinrichtung 40 und zugehöriger Kleberapplikationsdüse 41, dargestellt.

Zum Einsetzen eines Dachmoduls 2 in eine Fahrzeugkarosserie 9 wird wie folgt vorgegangen. Ein Montageroboter 20, 30 greift mit einer Greifvorrichtung 23, 33 passgenau das über den Ladungsträger 5 an der Entnahmestation 61 zugeführte Dachmodul 2 an dessen Außenseite 3. Danach dreht der Roboterarm 22, 32 des Montageroboters 20, 30 das Dachmodul 2 so, dass dessen Innenseite 4 nach oben weist und schwenkt dann das Dachmodul 2 mit der nach oben weisenden Innenseite 4 unter eine, an einer stationären Kleberapplikationseinrichtung 40, 50 aufgebrachten Kleberapplikationsdüse 41, 51. Zur Klebstoffapplikationen bewegt der Montageroboter 20, 30 das Dachmodul 2 auf einer vorgegebenen Bahn unter der Kleberapplikationsdüse 41, 51 entlang. Anschließend schwenkt der Montageroboter 20, 30 das Dachmodul 2 zurück in Einbaulage. Vorzugsweise zeitgleich wird die Fahrzeugkarosserie 9 mittels des Fahrzeugkarosseriefördersystems 8 an eine genau definierte Position gebracht. Anschließend positioniert der Montageroboter 20, 30 das Dachmodul 2 passgenau zur Fahrzeugkarosserie 9, fügt es in die endgültige Einbauposition in der Fahrzeugkarosserie 9 ein und presst das Dachmodul 2 an.

### Bezugszeichenliste

- 1): Montagezelle
- 2): Dachmodul
- 3): Außenseite des Dachmoduls
- 4): Innenseite des Dachmoduls
- 5): Ladungsträger
- 6): Klebstofffass
- 7): Klebstoffpumpe
- 8): Fahrzeugkarosseriefördersystem
- 9): Fahrzeugkarosserie
- 10): Dachausschnitt

- 20): Montageroboter
- 21): Grundplatte
- 22): Roboterarm
- 23): Greifvorrichtung

- 30): Montageroboter
- 31): Grundplatte
- 32): Schwenkarm
- 33): Greifvorrichtung

- 40): Kleberapplikationenseinrichtung
- 41): Kleberapplikationsdüse

- 50): Kleberapplikationenseinrichtung
- 51): Kleberapplikationsdüse

- 60): neuer Ladungsträger mit neuen Dachmodulen
- 61): gemeinsame Entnahmestation für beide Roboter
- 62): leerer Ladungsträger nach Entnahme aller Dachmodule

## Patentansprüche

1. Verfahren zum Einkleben eines Fahrzeugkarosserieteils (2) in eine Fahrzeugkarosserie (9), welches die folgenden Schritte aufweist:
- Bereitstellen und Aufnehmen des Fahrzeugteils (2);
- Bewegen des umgedrehten Fahrzeugkarosserieteils (2) zu einer Kleberapplikationseinrichtung (40), welche eine Kleberapplikationsdüse (41) aufweist;
- Bewegen des umgedrehten Fahrzeugkarosserieteils (2) entlang einer vorgegebenen Bahn an einer Kleberapplikationsdüse (41), so dass Kleber auf dem Fahrzeugkarosserieteil (2) an wenigstens einer Klebestelle aufgetragen wird;
- Ausrichten des Fahrzeugkarosserieteils (2) passgenau zur Fahrzeugkarosserie (9);
- Bewegen des Fahrzeugkarosserieteils (2) in die Einbaulage und Andrücken der wenigstens einen Klebestelle des Fahrzeugkarosserieteils (2) an die Fahrzeugkarosserie (9);
- Loslassen des Fahrzeugkarosserieteils (2).

2. Verfahren nach Anspruch 1,
wobei zum Kleberauftrag das Fahrzeugkarosserieteil (2) so gedreht wird, dass der Kleber auf eine oben gelegene Stelle eines Fahrzeugkarosserieteils (2) aufgebracht wird.

3. Montagezelle (1) zum Einkleben eines Fahrzeugkarosserieteils (2) in einen Ausschnitt (10) einer mittels eines Fahrzeugkarosseriefördersystems (8) zugeführten Fahrzeugkarosserie (9), welche die folgenden Komponenten aufweist:
- einen Montageroboter (20), welcher sich in alle drei Raumrichtungen bewegen kann;
- eine feststehende Kleberapplikationseinrichtung (40), mit einer Kleberdüse (41), wobei die Kleberdüse (41) genau eine Drehachse aufweist;
wobei der Montageroboter (20) die vorstehenden, für das Einkleben eines Fahrzeugkarosserieteils (2) benötigten Bewegungen durchführt.

4. Montagezelle (1) nach Anspruch 3,
mit einem zweiten Montageroboter (30) und mit einer zweiten Kleberapplikationseinrichtung (50),
wobei der zweite Montageroboter (30) identisch mit dem ersten Montageroboter (20) und die zweite Kleberapplikationseinrichtung (50) identisch mit der ersten Kleberapplikationseinrichtung (40) ausgeführt ist und
wobei der erste Montageroboter (20) und der zweite Montageroboter (30) die vorstehenden, für das Einkleben des Fahrzeugkarosserieteils (2) benötigten Bewegungen alternierend durchführen.

5. Montagezelle nach Anspruch 3 oder 4,
wobei der Montageroboter (20, 30) einen Roboterarm (22, 32) aufweist zur Aufnahme und Handhabung des Fahrzeugkarosserieteils (2).

6. Montagezelle (1) nach Anspruch 5,
wobei mittels des Roboterarms (22, 32) das Fahrzeugkarosserieteil (2) im Raum schwenkbar ist.

7. Montagezelle (1) nach einem der Ansprüche 3 bis 6, welche Klebstofffässer (6) mit Klebstoffpumpen (7) aufweist.

## Claims

1. Method of adhesion of a vehicle body part (2) into a vehicle body (9), comprising the following steps:
- supplying and picking up the vehicle part (2);
- moving the turned-over vehicle body part (2) to an adhesive application device (40) that has an adhesive application nozzle (41);
- moving the turned-over vehicle body part (2) along a preset path at an adhesive application nozzle (41) so that adhesive is applied to at least one adhesive point on the vehicle body part (2);
- aligning the vehicle body part (2) in a precise-fitting manner relative to the vehicle body (9);
- moving the vehicle body part (2) into the installation position and pressing the at least one adhesive point of the vehicle body part (2) onto the vehicle body (9);
- releasing the vehicle body part (2).

2. Method according to claim 1,
wherein for applying adhesive the vehicle body part (2) is rotated such that the adhesive is applied onto an upper-lying point of a vehicle body part (2).

3. Assembly cell (1) for adhesion of a vehicle body part (2) into a cut-out opening (10) of a vehicle body (9), which is fed by means of a vehicle body conveying system (8), comprising the following components:
- an assembly robot (20), which is able to move in all three directions in space;
- a stationary adhesive application device (40), with an adhesive nozzle (41), wherein the adhesive nozzle (41) has precisely one axis of rotation;
wherein the assembly robot (20) executes the above movements necessary for adhesion of a vehicle body part (2) in place.

4. Assembly cell (1) according to claim 3,
having a second assembly robot (30) and having a second adhesive application device (50),
wherein the second assembly robot (30) is of an identical design to the first assembly robot (20) and the second adhesive application device (50) is of an identical design to the first adhesive application device (40) and
wherein the first assembly robot (20) and the second assembly robot (30) alternately execute the above movements necessary for adhesion of the vehicle body part (2) in place.

5. Assembly cell according to claim 3 or 4,
wherein the assembly robot (20, 30) has a robot arm (22, 32) for picking up and handling the vehicle body part (2).

6. Assembly cell (1) according to claim 5,
wherein by means of the robot arm (22, 32) the vehicle body part (2) is rotatable in space.

7. Assembly cell (1) according to one of claims 3 to 6, which comprises adhesive drums (6) with adhesive pumps (7).

## Revendications

1. Procédé pour l'intégration par collage d'un élément de carrosserie de véhicule (2) dans une carrosserie de véhicule (9), comportant les étapes suivantes:
- présentation et préhension de l'élément de carrosserie de véhicule (2);
- déplacement de l'élément de carrosserie de véhicule (2) retourné vers un dispositif d'application d'adhésif (40), comportant une buse d'application d'adhésif (41) ;
- déplacement de l'élément de carrosserie de véhicule (2) retourné le long d'une trajectoire prédéfinie, à une buse d'application d'adhésif (41), pour que de l'adhésif soit appliqué sur l'élément de carrosserie de véhicule (2), sur au moins un point de collage ;
- orientation de l'élément de carrosserie de véhicule (2) de façon précisément ajustée par rapport à la carrosserie de véhicule (9) ;
- déplacement de l'élément de carrosserie de véhicule (2) dans la position d'intégration et pression sur le au moins un point de collage de l'élément de carrosserie de véhicule (2) sur la carrosserie de véhicule (9) ;
- relâchement de l'élément de carrosserie de véhicule (2).

2. Procédé selon la revendication 1,
- dans lequel l'élément de carrosserie de véhicule (2) est tourné pour l'application d'adhésif de sorte que l'adhésif soit appliqué sur un point situé en haut d'un élément de carrosserie de véhicule (2).

3. Cellule de montage (1) pour l'intégration par collage d'un élément de carrosserie de véhicule (2) dans une découpe (10) d'une carrosserie de véhicule (9) acheminée au moyen d'un système de transport de carrosserie de véhicule (8), comportant les composants suivants :
- un robot de montage (20), qui peut se déplacer dans toutes les trois directions dans l'espace;
- un dispositif d'application d'adhésif (40) stationnaire, avec une buse d'adhésif (41), la buse d'adhésif (41) comportant précisément un axe de rotation ;
dans lequel le robot de montage (20) effectue les déplacements précédents, nécessaires pour l'intégration par collage d'un élément de carrosserie de véhicule (2).

4. Cellule de montage (1) selon la revendication 3, avec un deuxième robot de montage (30) et avec un deuxième dispositif d'application d'adhésif (50),
dans lequel le deuxième robot de montage (30) est réalisé de façon identique au premier robot de montage (20) et le deuxième dispositif d'application d'adhésif (50) étant réalisé de façon identique au premier dispositif d'application d'adhésif (40) et et
dans lequel le premier robot de montage (20) et le deuxième robot de montage (30) effectue en alternance les déplacements précédents, nécessaires pour l'intégration par collage de l'élément de carrosserie de véhicule (2).

5. Cellule de montage selon la revendication 3 ou 4,
dans lequel le robot de montage (20, 30) comporte un bras de robot (22, 32) pour prendre et pour manipuler l'élément de carrosserie de véhicule (2).

6. Cellule de montage (1) selon la revendication 5,
dans lequel l'élément de carrosserie de véhicule (2) est susceptible d'être pivoté dans l'espace au moyen du bras de robot (22, 32).

7. Cellule de montage (1) selon l'une quelconque des revendications 3 à 6, comportant des fûts de matière adhésive (6) avec des pompes à matière adhésive (7).
